# EUROPÄISCHE PATENTSCHRIFT

(11) **EP 0 551 817 B1**
(45) Veröffentlichungstag und Bekanntmachung des Hinweises auf die Patenterteilung: **20.11.1996**
(21) Anmeldenummer: 93100076.4
(22) Anmeldetag: 05.01.1993
(51) Int. Cl.: C08F 2/28

(54) **Vinylpolymerisat-Dispersionen**
Vinyl polymer dispersions
Dispersions de polymères vinyliques

(30) Priorität: 14.01.1992 DE 4200715
(43) Veröffentlichungstag der Anmeldung: 21.07.1993
(73) Patentinhaber: BAYER AG, 51368 Leverkusen (DE)
(72) Erfinder: Müller, Michael, Dr., W-5060 Bergisch Gladbach 2 (DE); Probst, Joachim, Dr., W-5090 Leverkusen (DE); Alberts, Heinrich, Dr., W-5068 Odenthal (DE); König, Joachim, Dr., w-5068 Odenthal (DE); Bäumgen, Heinz, W-5090 Leverkusen (DE); Puchner, Fritz, Dr., W-5000 Köln 50 (DE)

(56) Entgegenhaltungen:
- EP-A- 0 197 411
- DE-A- 1 802 435

## Beschreibung

Die vorliegende Erfindung betrifft, ein Verfahren zur Herstellung von Vinylpolymerisat-Dispersionen auf Basis olefinisch ungesättigter Monomere und hydrophobierter Polykationen und die Verwendung der Dispersionen als Papierleimungsmittel.

Aus der EP-A-0 058 313 ist es bekannt, kationische Papierleimungsmittel in Form kolloiddisperser Lösungen herzustellen, bei denen man Acrylnitril oder Methacrylnitril mit Acrylsäure- oder Methacrylsäureestern in Gegenwart spezieller polymerer, kationischer Emulgatoren im wäßrigen System polymerisiert. Bei den speziellen Emulgatoren handelt es sich um Quaternierungsprodukte von Terpolymeren aus N,N-Dimethylaminoethyl(meth)acrylat, Styrol und Acrylnitril.

In der DE-A-3 401 573 wird die Herstellung von kolloiddispersen, für Schrenzpapier besonders wirksamen Papierleimungsmitteln beschrieben, wenn man entweder Mischungen von (Meth)acrylnitril, Styrol und Acrylsäure- oder Methacrylsäureester oder Mischungen von Styrol und Acrylsäure- oder Methacrylsäureester in Gegenwart der oben genannten quaternierten Terpolymerisate polymerisiert.

Ein Nachteil dieser kolloiddispersen Leimungsmittel ist ihre in der Praxis oft unbefriedigende Stabilität in Gegenwart von Elektrolyten und bei erhöhten Temperaturen etwa über 60°C, bei Anwendung starker Scherkräfte sowie ihre Schaumbildungstendenz. Größere Mengen an Elektrolyten treten im Papierherstellungsprozeß z.B. dann auf, wenn enzymatisch abgebaute Stärke als Zusatzstoff der Leimungsflotte zugegeben wird. Die Enzymaktivität wird nach dem Stärkeabbau nämlich durch Zugabe von Säuren wie Schwefel- oder Salzsäure gestoppt; die Elektrolyte entstehen dann durch Zugabe von Basen bei der Neutralisation des Säureüberschusses. Da der enzymatische Stärkeabbau oft auch bei höheren Temperaturen von ca. 80-100°C erfolgt und die Stärkelösung der Leimungsflotte meist sofort zugegeben wird, ist im allgemeinen mit einer Temperaturerhöhung der Leimungsflotte auf maximal diese Temperaturen zu rechnen. Bei diesen Bedingungen agglomerieren und koagulieren die vorbeschriebenen kolloiddispersen Leimungsmittel teilweise oder auch vollständig. Es bilden sich Belegungen auf der Papiermaschine und der Leimungseffekt wird drastisch reduziert. Zu ähnlichen Effekten können hohe Scherkräfte, die bei der Papierherstellung ebenfalls auftreten können, führen.

In der DE-A-3 537 824 werden kationische Leimungsmittel für Papier mit verbesserter Stabilität und verringerter Schaumneigung beschrieben, die aus denselben Monomeren wie in der EP 0 058 313 und der DE-A-3 401 573 aufgebaut sind, aber die Quaternierung des verwendeten Emulgators auf Basis N,N-Dimethylaminoethyl(meth)acrylat, Styrol und Acrylnitril nicht mit Epichlorhydrin, sondern einfachen, d.h. nicht halogenhaltigen Monoepoxiden erfolgt. Die Herstellung der speziellen kationischen Emulgatoren erfolgt hierbei, wie in den zuvor genannten Beispielen in organischen Lösungsmitteln, die vor oder nach dem Einsatz der kationischen Emulgatoren in der nachfolgenden Polymerisation ausgetauscht werden müssen. Diese Verfahrensweise ist aus wirtschaftlicher und ökologischer Sicht nachteilig.

Weiterhin von Nachteil bei allen oben beschriebenen Leimungsmitteln ist eine zu starke Schaumneigung, die ebenfalls zu Störungen im Papierverarbeitungsprozeß führen kann.

Die aus dem Stand der Technik bekannten Leimungsmittel sind zumeist nicht gleichermaßen für die Masse- und Oberflächenleimung von Papier geeignet bzw. für den Einsatz in der Masseleimung nicht genügend preiswert.

Dimere Alkylketene sind bekannte Reaktivleimungsmittel für Papier. Zur notwendigen Verteilung des Alkylketendimers in wäßriger Lösung wird der Einsatz kationischer Dispergatoren wie Polyamidpolyamin-Epichlorhydrin-Harze (US 3 046 186) oder "Ein-Topf-Umsetzungsprodukte" aus verschiedenen Carbonsäuren mit Polyalkylenpolyaminen und Epichlorhydrin beschrieben (EP 054 075). Die erhaltenen Mischungen sind jedoch nur begrenzt lagerstabil. Die US 4 087 395 beschreibt Epichlorhydrin-harze von Polyamidpolyaminen, welche mit Carbonsäure-Derivaten mit unsubstituiertem Acylrest umgesetzt werden. Diese Verbindungen zeigten nur in wenig lagerstabilen Abmischungen mit Keten-Dimeren eine deutliche Leimungswirkung auf Papier.

Es wurde nun gefunden, daß man scher-, elektrolyt-, thermo- und lagerstabile Papierleimungsmittel für die Masse- und Oberflächenleimung in einem wirtschaftlich und ökologisch günstigen Verfahren erhält, wenn man bestimmte olefinisch ungesättigte Monomere in Gegenwart kationischer, hydrophobierter Polyamidamine polymerisiert.

Die vorliegende Erfindung betrifft ein Verfahren zur Herstellung von Vinylpolymerisat-Dispersionen durch radikalisch initiierte Emulsionspolymerisation von olefinisch ungesättigten Monomeren im wäßrigen Medium, dadurch gekennzeichnet, daß als Emulgator ein kationisches hydrophobiertes Polyamidamin mit einem Gehalt an kationischen Gruppen zwischen 0,01 und 0,3 Ladungsäquivalenten pro 100 g dieses Stoffes, einem Gehalt an hydrophoben Gruppen zwischen 0,5 und 50 Gew-% und einem Gehalt an basischen Stickstoffatomen zwischen 0 und 3 Gew.-%, jeweils bezogen auf kationisches, hydrophobiertes Polyamidamin, eingesetzt wird, das erhältlich ist durch Hydrophobierung eines basischen Polyamidamins (A) mit Monocarbonsäuren (B), nachfolgender Protonierung mit Säuren (C) und/oder Quaternierung mit Monoepoxiden (D).

Unter einem "hydrophobierten" Polyamidamin ist im Sinne dieser Erfindung ein Polyamidamin zu verstehen, welches endständige langkettige, aliphatische Kohlenwasserstoffreste mit mindestens 7 C-Atomen, die sich von den entsprechenden Monocarbonsäuren ableiten, aufweist.

Als basische Polyamidamine (A) zur Herstellung der kationischen, hydrophobierten Polyamidamine eignen sich Kondensationsprodukte, bestehend aus Struktureinheiten, die sich ableiten von
a1): Polyaminen, die mindestens zwei zur Amidbildung befähigte Aminogruppen und mindestens eine weitere sekundäre oder tertiäre Aminogruppe enthalten
und gegebenenfalls
a2): Polyaminen, die zwei zur Amidbildung befähigte Aminogruppen enthalten
b): gesättigte oder ungesättigte aliphatische und/oder aromatische Dicarbonsäuren und/oder deren funktionellen Derivaten
und gegebenenfalls
c): omega-Aminocarbonsäuren und/oder Lactamen,
wobei, bezogen auf 1 Mol der Komponente b), bevorzugt 0,8 bis 1,2 Mol der Komponente a1), gegebenenfalls bis zu 0,8 Mol der Komponente a2) und gegebenenfalls bis zu 1,5 Mol der Komponente c) eingesetzt werden, mit der Maßgabe, daß das Molverhältnis a):b) Werte zwischen 0,8: 1 und 1,2: 1 annimmt.

Die Polyamine a1) entsprechen vorzugsweise der Formel 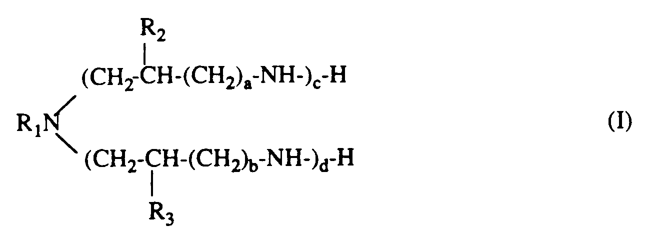 worin
R₁, R₂, R₃ unabhängig voneinander für H, Methyl, Ethyl oder 2-Hydroxyethyl stehen,
a und b unabhängig voneinander für 0, 1, 2, 3 oder 4 stehen,
c und d unabhängig voneinander für 1, 2, 3, 4, 5 oder 6 stehen,
und/oder der Formel 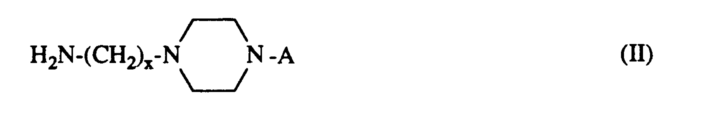 worin
- x: für 2 oder 3 steht und
- A: für Wasserstoff, Aminoethyl oder Aminopropyl steht.

Beispiele für Polyamine a1) der Formel (I) sind Diethylentriamin, Triethylentetramin, Tetraethylenpentamin, Pentaethylenhexamin, Hexaethylenheptamin, Dipropylentriamin, Dihexamethylentriamin, N-Methyl-bis(3-aminopropyl)amin, Tris(2-aminoethyl)amin.

Beispiele für Polyamine a1) der Formel (II) sind N-(2-Aminoethyl)piperazin, N,N'-Bisaminoethylpiperazin und N,N'-Bisaminopropylpiperazin.

Bevorzugte Polyamine a1) sind Triethylentetramin, Diethylentriamin und N-Methyl-bis(3-aminopropyl)amin.

Die Polyamine a2) entsprechen vorzugsweise der Formel 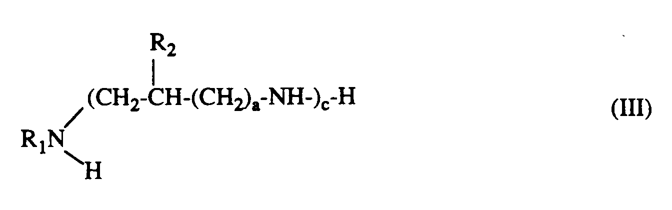
worin
R₁, R₂, a und c die oben angegebene Bedeutung haben,
und/oder der Formel 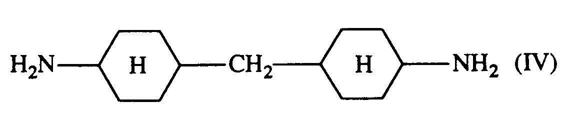
und/oder der Formel

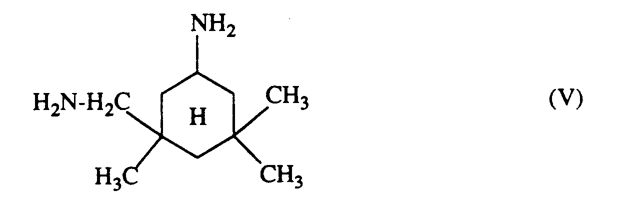

Beispiele für Polyamine a2) sind Ethylendiamin, Diaminopropan, 1,6-Diaminohexan, N-(2-Hydroxyethyl)ethylendiamin, N,N'-Dimethylethylendiamin, N-Methyl-1,3-diaminopropan, Isophorondiamin, 4,4'-Diaminodicyclohexylmethan.

Bevorzugte Lactame c) sind beispielsweise ε-Caprolactam und Lauryllactam, bevorzugte Aminocarbonsäuren c) sind 6-Aminocapronsäure und 11-Aminoundecansäure.

Bevorzugt eingesetzt werden Dicarbonsäuren b) bzw. deren Alkylester die der Formel

R₄-O-CO-(CH₂)ₑ-CO-O-R₅ (VI)

worin
R₄ und R₅ unabhängig voneinander für Wasserstoff, C₁-C₆-Alkyl oder Phenyl stehen und e für 0 oder eine ganze Zahl von 1 bis 10 steht,
entsprechen.

Naturgemäß können bei der Herstellung der Polyamidamine (A) auch Gemische von Dicarbonsäuren b) oder deren funktionelle Derivate eingesetzt werden. Beispielhaft seien folgende Dicarbonsäuren bzw. Dicarbonsäurederivate b) genannt:

Oxalsäure, Malonsäure, Bernsteinsäure, Glutarsäure, Adipinsäure, Sebacinsäure, Oxalsäuredimethylester, Oxalsäurediethylester, Malonsäurediethylester, Bernsteinsäureanhydrid, Glutarsäuremonomethylester, Glutarsäurediethylester, Adipinsäuremonomethylester, Adipinsäuredimethylester, Sebacinsäuredimethylester, Isophthalsäure, Terephthalsäure, Isophthalsäuredimethylester, Maleinsäureanhydrid, Itaconsäure, Itaconsäuredimethylester, Phthalsäure. Bevorzugt ist Adipinsäure.

Als basische Polyamidamine (A) kommen auch solche in Betracht, bei denen bis zu 20 Mol-% der vorhandenen sekundären basischen Aminogruppen durch Alkylierung in tertiäre Aminogruppen überführt wurden. Unter Alkylierung ist hierbei die Umsetzung der sekundären Aminogruppen mit Alkylhalogeniden, Alkylalkansulfonaten und Acrylverbindungen zu verstehen. Beispielsweise seien folgende Alkylhalogenide genannt:

Methylchlorid, Ethylchlorid, Chlorpropanol, Chlorethanol, Chlorpropandiol.

Beispielhaft seien folgende Alkylalkansulfonate genannt:

Methansulfonsäuremethylester, Methansulfonsäureethylester, Ethansulfonsäurechlorpropylester.

Die Herstellung der Polyamidamine erfolgt in der üblichen Weise z.B. dadurch, daß man die Komponenten a1), gegebenenfalls a2) und b) sowie gegebenenfalls c) zunächst auf Temperaturen zwischen 100 und 150°C erhitzt und die erhaltene dünnflüssige Schmelze nach maximal drei Stunden langsam auf maximal 220°C unter Normaldruck weiter erhitzt, wobei das gebildete Reaktionswasser abdestilliert wird. Zur Vermeidung von Verfärbungen ist es zweckmäßig, unter Ausschluß von Sauerstoff zu kondensieren und gegebenenfalls in geringen Mengen Carbonsäurehydrazide zuzusetzen. Es wird dabei solange destilliert, bis die theoretische Menge an Wasser dem Gleichgewicht entzogen ist, d.h. es muß pro Mol Carboxylgruppe der Dicarbonsäure 1 Mol Wasser abgespalten werden.

Für die Hydrophobierung der basischen Polyamidamine (A) werden langkettige Monocarbonsäuren (B) eingesetzt.

Die Monocarbonsäuren (B) entsprechen den Formeln

R₆-COOH (VII)

worin
- R₆: für geradkettiges oder verzweigtes, gesättigtes oder olefinisch ungesättigtes Alkyl mit 7 bis 31 C-Atomen steht,
und

R₇-COOH (VIII)

worin
- R₇: für geradkettiges oder verzweigtes, gesättigtes oder olefinisch ungesättigtes Monohydroxyalkyl mit 7 bis 31 C-Atomen steht.

Besonders bevorzugte Monocarbonsäuren (B) sind weiterhin Hydroxycarbonsäure-Polykondensate der Formel

H-[-O-R₆-CO-]_{f}-OH (IX)

worin
- R₆: die oben unter Formel (VII) angegebene Bedeutung hat, und
- f: für eine ganze Zahl von 2 bis 50, vorzugsweise von 3 bis 20 steht.

Die genannten Monocarbonsäuren (B) der Formeln (VII), (VIII) und (IX) können einzeln aber auch in beliebiger Mischung untereinander eingesetzt werden.

Die Hydroxycarbonsäure-Polykondensate (IX) werden besonders bevorzugt in Form ihrer funktionellen Derivate der Formeln

R₆-CO-[-O-R₆-CO-]_{f}-OH (X),

H-[O-R₆-CO-]_{f}-Cl (XI)

und

R₆-CO-[-O-R₆-CO-]_{f}-Cl (XII)

worin
R₆ und f jeweils die oben angegebene Bedeutung haben,
mit den basischen Polyamidaminen umgesetzt.

Die Derivatisierung der Polykondensate (IX) erfolgt z.B. durch Acylierung der freien Alkohol-Funktion zu einem Ester (X) und/oder Aktivierung der freien Säure-Funktion zu einem Säurechlorid (XI) bzw. (XII).

Die Polykondensate (IX) entstehen in bekannter Weise (vgl. z.B. Houben-Weyl, Methoden der Organischen Chemie, Band XIV/2, G. Thieme Verlag) bei Erwärmung der Hydroxycarbonsäuren (VIII) gegebenenfalls unter Zusatz von Säuren oder Tetraaalkyltitanaten und z.B. azeotroper Entfernung des entstehenden Wassers.

Die funktionellen Derivate der Formel (X), können aus den Polykondensaten (IX) durch Acylierung der freien Alkoholfunktion mit einer Monocarbonsäure (VII) oder deren Säurechloriden oder Anhydriden erhalten werden.

Die Verbindungen der Formeln (XI) und (XII) können durch Umsetzung der Polykondensate (IX) bzw. der acylierten Derivate der Formel (X) mit anorganischen Säurechloriden wie z.B. Phosphortrichlorid, Phosphorpentachlorid oder Thionylchlorid erhalten werden.

Die funktionellen Derivate der Formel (X) können einzeln oder in beliebigen Mischungen untereinander, mit den Hydroxycarbonsäure-Polykondensaten (IX) oder mit den Carbonsäuren (VII) und (VIII) als Monocarbonsäuren (B) eingesetzt werden.

Die Säurechloride der Formeln (XI) und (XII) können einzeln oder im Gemisch untereinander eingesetzt werden, vorteilhafterweise jedoch nicht im Gemisch mit den übrigen unter (B) genannten Monocarbonsäuren.

Geeignete Hydroxycarbonsäuren (VIII) sind beispielsweise 2-Hydroxydodecan-, 2-Hydroxytetradecan- und 2-Hydroxyhexadecansäure. Besonders bevorzugt sind beispielsweise 12-Hydroxyoctadecansäure und 11-Hydroxyhexadecan- und -pentadecansäure. Auch entsprechende ungesättigte Hydroxycarbonsäuren wie 12-Hydroxy-9-octadecensäure sind geeignete Verbindungen.

Zu den geeigneten langkettigen Carbonsäuren (VIII) gehören beispielsweise Decan-, Dodecan-, Tetradecan-, Hexadecan-, Octadecan-, Eicosan- und Docosansäure sowie die ungesättigten Säuren Ölsäure, Linolsäure, Linolensäure und Docosensäure.

Insbesondere können auch Mischungen verschiedener Hydroxycarbonsäuren und Mischungen verschiedener langkettiger Carbonsäuren eingesetzt werden.

Zur Hydrophobierung der basischen Polyamidamine (A) werden diese in aufgeschmolzener Form bei Temperaturen zwischen 120 und 250°C vorgelegt und mit der langkettigen Carbonsäure (VII), der Hydroxycarbonsäure (VIII), dem Hydroxycarbonsäure Polykondensat (IX) oder dessen acylierten bzw. aktivierten Derivaten (X), (XI) oder (XII) bzw. den genannten Mischungen dieser Komponenten versetzt. Unter Abfühung flüchtiger Reaktionsprodukte wird bei unveränderter Temperatur bis zum Reaktionsende zwischen 2 und 10 Stunden gerührt.

Die anschließende Protonierung und/oder Quaternierung der hydrophobierten basischen Polyamidamine führt zu kationischen, hydrophobierten Polyamidamine. Zur Protonierung geeignete Säuren (C) sind z.B. anorganische Säuren wie Salzsäure, Schwefelsäure, Salpetersäure oder Phosphorsäure. Bevorzugte Säuren (C) sind verdünnte oder konzentrierte organischer Carbonsäuren mit kurzer Alkylkette, die 1 bis 4 C-Atome enthält, wie Ameisensäure, Essigsäure, Propionsäure oder Milchsäure. Besonders bevorzugt ist Essigsäure. Die Menge an Säure (C) wird im allgemeinen so gewählt, daß alle Aminofunktionen des hydrophobierten, basischen Polyamidamins vollständig protoniert werden. Es kann jedoch auch eine unter- oder überstöchiometrische Menge an Säure (C) eingesetzt werden.

Werden zur Hydrophobierung der Polyamidamine (A) Säurechloride der Formeln (XI) oder (XII) eingesetzt, kommt es bereits während der Reaktion zu einer teilweisen Protonierung durch freiwerdenden Chlorwasserstoff, der weitgehend durch freie Aminfunktionen des Polyamidamins abgefangen wird.

Zur Quaternierung geeignete Monoepoxide (D) sind Ethylenoxid, 1,2-Butylenoxid, 2,3-Butylenoxid, Isobutylenoxid, 1,2-Epoxidecan, 1,2-Epoxidodecan, Styroloxid, Cyclohexenoxid oder Glycidylalkohol. Bevorzugt ist Propylenoxid. Ein besonders bevorzugtes Monoepoxid ist Epichlorhydrin. Die Monoepoxide (D) werden im allgemeinen in Mengen von 1 bis 80, bevorzugt 1 bis 40 und besonders bevorzugt 5 bis 20 Mol-%, bezogen auf den Gehalt an basischen Amin-Funktionen im hydrophobierten, basischen Polyamidamin, eingesetzt.

Die hydrophobierten, basischen Polyamidamine können jedoch auch dadurch ihre kationische Ladung erhalten, daß sie zuerst in der genannten Weise teilquaterniert werden und anschließend durch Säurezugabe zusätzlich protoniert werden.

Die in dem erfindungsgemäßen Verfahren als Emulgatoren eingesetzten kationischen, hydrophobierten Polyamidamine werden vorzugsweise erhalten durch Kondensation von Polyaminen a1) der Formel 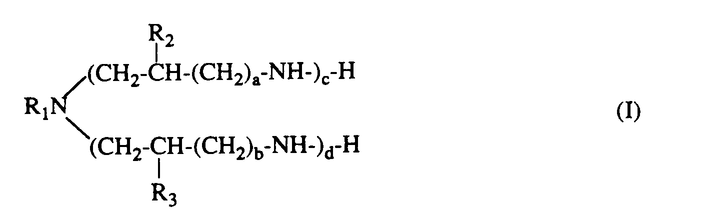
worin
- R₁, R₂ und R₃: unabhängig voneinander für H, Methyl, Ethyl oder 2-Hydroxyethyl stehen,
- a und b: unabhängig voneinander für 0, 1, 2, 3 oder 4 stehen,
- c und d: unabhängig voneinander für 1, 2, 3, 4, 5 oder 6 stehen
und/oder der Formel 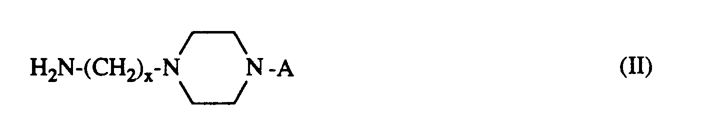
worin
- x: für 2 oder 3 steht und
- A: für Wasserstoff, Aminoethyl oder Aminopropyl steht,
und gegebenenfalls Polyaminen a2) der Formel 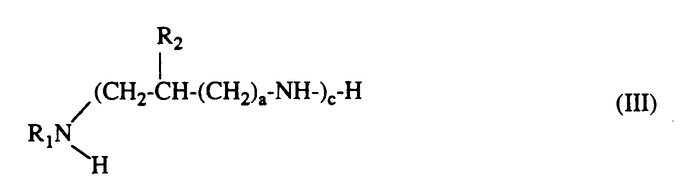
worin
R₁, R₂, a und c die oben angegebene Bedeutung haben,
mit 80 bis 120 Mol-% Dicarbonsäuren bzw. deren Derivaten b) der Formel

R₄-O-CO-(CH₂)ₑ-CO-O-R₅ (VI)

worin
- R₄ und R₅: unabhängig voneinander für Wasserstoff, C₁-C₆-Alkyl oder Phenyl stehen und
- e: für 0 oder eine ganze Zahl von 1 bis 10 steht,
bezogen auf die insgesamt eingesetzte Molmenge an Polyaminen, anschließender Hydrophobierung der so erhaltenen basischen Polyamidamine (A) mit 10 bis 100 Mol-% einer langkettigen Monocarbonsäure (B) der Formel

R₆-COOH (VII)

worin
- R₆: für geradkettiges oder verzweigtes, gesättigtes oder olefinisch ungesättigtes Alkyl mit 7 bis 31 C-Atomen steht,
und/oder der Formel

R₇-COOH (VIII)

worin
- R₇: für geradkettiges oder verzweigtes, gesättigtes oder olefinisch ungesättigtes Monohydroxyalkyl mit 7 bis 31 C-Atomen steht,
und/oder der Formel

H-[-O-R₆-CO-]_{f}-OH (IX)

und/oder der Formel

R₆-CO-[-O-R₆-CO-]_{f}-OH (X)

oder mit 10 bis 100 Mol-% eines Säurechlorids der Formel

H-[-O-R₆-CO-]_{f}-Cl (XI)

und/oder der Formel

R₆-CO-[-O-R₆-CO-]_{f}-Cl (XII)

wobei jeweils
R₆ und f die oben angegebenen Bedeutungen haben,
und die Mol-%-Angaben für die Formeln (VII) bis (XII) sich jeweils auf den Gehalt an primären und sekundären Aminfunktionen im basischen Polyamidamin (A) beziehen,
nachfolgender Protonierung des so erhaltenen hydrophobierten Polyamidamins mit 50 bis 100 Mol-% dissoziierter Protonen einer Säure (C) und/oder Quaternierung mit 1 bis 80 Mol-% eines Monoepoxids (D), jeweils bezogen auf den Gehalt an basischen Aminfunktionen im hydrophobierten Polyamidamin (A).

Gemäß dem erfindungsgemäßen Verfahren werden olefinisch ungesättigte Monomere in Gegenwart der oben näher beschriebenen Emulgatoren radikalisch polymerisiert.

Als radikalisch polymerisierbare Monomere eignen sich insbesondere Styrol(derivate), Ester der (Meth)acrylsäure insbesondere mit gegebenenfalls weitersubstituierten C₁-C₁₂-Alkylresten und/oder (Meth)acrylnitril sowie Gemische dieser Monomeren. Beispielhaft seien genannt: Styrol, α-Methylstyrol, p-Methylstyrol, p-Ethylstyrol, p-Chlorstyrol, Acrylnitril, Vinylacetat, Ethylacrylat, Methylmethacrylat, n-Butylacrylat, i-Butylacrylat, 2-Ethylhexylacrylat, Methacrylsäureoxipropylester.

Es können sowohl die Monomeren alleine oder deren Gemische untereinander zur Herstellung der erfindungsgemäßen Vinylpolymerisat-Dispersionen verwendet werden. Ganz besonders bevorzugt wird ein Monomerengemisch aus
d) 5 bis 95, vorzugsweise 20 bis 80 Gew.-% Acrylnitril, Methacrylnitril oder Styrol oder deren Mischungen
und
e) 5 bis 95, vorzugsweise 20 bis 80 Gew.-% (Meth)acrylsäureester mit 1 bis 12 C-Atomen im Alkoholrest
- wobei die Summe der Komponenten d) und e) stets 100 Gew.% beträgt -
zur Herstellung der erfindungsgemäßen Vinylpolymerisat-Dispersionen verwendet.

(Meth)acryl-Derivate im Rahmen dieser Erfindung sind Derivate der Methacryl-oder Acrylsäure.

Als (Meth)acrylsäureester, die bei der radikalischen Copolymerisation als Comonomere eingesetzt werden, sind vorzugsweise solche Verbindungen geeignet, die mit (Meth)acrylnitril oder Styrol bzw. deren Mischungen Copolymerisate mit Filmbildungstemperaturen unterhalb von 100°C bilden. Prinzipiell geeignet sind Acrylate wie Methyl-, Ethyl-, n-Butyl- und 2-Ethylhexylacrylat sowie Methacrylate wie Methyl-und n-Butylmethacrylat. Besonders geeignet ist n-Butylacrylat. Diese (Meth)acrylate können jeweils allein oder in einer Mischung verschiedener (Meth)acrylate mit Methacrylnitril, Acrylnitril oder Styrol bzw. mit Mischungen von zwei oder drei der zuletzt genannten Monomeren copolymerisiert werden. Bevorzugt als Copolymerisationspartner ist Acrylnitril. Der Gehalt an Styrol, Acrylnitril oder Methacrylnitril bzw. an Mischungen dieser Komponenten kann zwischen 5 und 95, vorzugsweise 20 und 80 und besonders bevorzugt zwischen 40 und 60 Gew.-% liegen.

Zur Herstellung der erfindungsgemäßen Vinylpolymerisat-Dispersionen wird vorzugsweise ein Monomerengemisch aus d) und e) in Gegenwart von 2 bis 70 Gew.-% eines kationischen, hydrophobierten Polyamidamins, bezogen auf das Monomerengemisch, in Wasser emulgiert, und die so erhaltene Emulsion einer radikalisch initiierten Emulsionspolymerisation bei Temperaturen von 20 bis 150°C unterworfen.

Zur Herstellung der erfindungsgemäßen Vinylpolymerisat-Dispersionen kann zusätzlich neben dem kationischen, hydrophobierten Polyamidamin ein weiterer kationischer und/oder nichtionogener Hilfsemulgator in Mengen von 1 bis 40 Gew.-%, vorzugsweise 3 bis 20 Gew.-% bezogen auf das vorstehende kationische, hydrophobierte Polyamidamin eingesetzt werden. Der nichtionogene Emulgator entspricht vorzugsweise der Formel

R₈-X-(CH₂-CHR₉-O)ₙ-(CH₂-CHR₁₀-O)ₘ-H (XIII),

worin
- X: für Sauerstoff, NH oder COO steht,
- R₈: für einen höheren aliphatischen, cycloaliphatischen, araliphatischen oder aromatischen Kohlenwasserstoffrest mit 4 bis 30 C-Atomen steht,
- R₉ und R₁₀: unabhängig voneinander für Alkylreste mit 1 bis 12 C-Atomen oder Wasserstoff stehen und
- n und m: unabhängig voneinander für eine ganze Zahl zwischen 2 und 100 stehen.

Der kationische Hilfsemulgator entspricht vorzugsweise der Formel 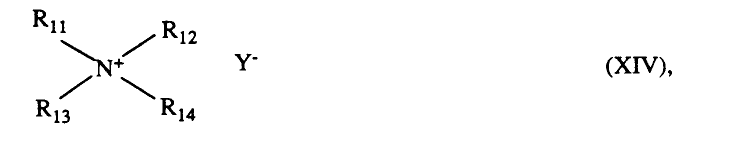
worin
- R₁₁ und R₁₂: unabhängig voneinander für einen höheren aliphatischen bzw. araliphatischen Kohlenwasserstoffrest mit 6 bis 20 C-Atomen stehen,
- R₁₃ und R₁₄: unabhängig voneinander für einen niederen aliphatischen Kohlenwasserstoffrest mit 1 bis 6 C-Atomen stehen und
- Y⁻: für ein Halogenidion steht.

Als nichtionogene Hilfsemulgatoren (XIII) eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z.B. Ethylenoxid. Beispiele hierfür sind Umsetzungsprodukte von Ethylenoxid mit Carbonsäuren wie z.B. Laurinsäure, Stearinsäure, Ölsäure, den Carbonsäuren des Ricinusöls, Abietinsäure, mit längerkettigen Alkoholen wie Oleyalkohol, Laurylalkohol, Stearylalkohol, mit Phenolderivaten wie z.B. substituierten Benzyl-, Phenylphenolen, Nonylphenol und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Als kationische, niedermolekulare Hilfsemulgatoren sind quartäre Ammoniumsalze wie z.B. Benzyldodecyl-dimethyl-ammoniumchlorid geeignet.

Als Initiatoren für die Emulsionspolymerisation kommen bevorzugt wasserlösliche, Radikale liefernde, nichtionogene Peroxide wie Wasserstoffperoxid und tert-Butylhydroperoxid sowie wasserlösliche Azoverbindungen gemäß DE-A-2 841 045 in Betracht. Weiterhin sind Redoxsysteme geeignet, die aus peroxidischen Initiatoren und Reduktionsmitteln wie Aminen, Polyaminen, Thioharnstoff, Eisen-(II)salzen usw. bestehen. Als Initiatoren kommen auch wasserunlösliche Initiatoren wie Azoisobutyronitril und Benzoylperoxid in Betracht. Letztere sind dann praktisch nur in der organischen Phase gelöst.

Die genannten Initiatoren werden in Mengen von 0,1 bis 5 Gew.%, bevorzugt 0,3 bis 3 Gew.% bezogen auf das Monomergemisch hinzugegeben.

Zur Regelung der Molekulargewichte der Polymeren können übliche Regler wie z.B. n-Dodecylmercaptan, tert-Dodecylmercaptan, Diisopropylxanthogendisulfid, Thioglykol und Thioglycerin eingesetzt werden. Sie werden in Mengen von 0,1 bis 2 Gew.%, bezogen auf die Monomermischung zugesetzt.

Die Emulsionspolymerisation im wäßrigen Medium kann nach bekannten Polymerisationsverfahren sowohl diskontinuierlich als auch kontinuierlich oder im Zulaufverfahren durchgeführt werden. Besonders bevorzugt sind das kontinuierliche und das Zulaufverfahren. Bei letzterem wird unter Stickstoffatmosphäre Wasser zusammen mit einem Teil oder dem gesamten Emulgatorsystem und gegebenenfalls einem Teil des Monomergemisches vorgelegt, auf die Polymerisationstemperatur von 20 bis 150°C, vorzugsweise 50 bis 100°C. erhitzt und das Monomergemisch sowie der Initiator und gegebenenfalls Emulgator innerhalb von 0,5 bis 10 Stunden, bevorzugt 1 bis 6 Stunden, zugetropft.

Nach einiger Zeit wird im allgemeinen nachaktiviert und die Reaktion bis zu einem Umsatz von ca. 98,0 bis 99,9% vervollständigt. Restmonomere werden im Anschluß an die Emulsionscopolymerisation im Vakuum destillativ entfernt. Danach wird soviel Wasser zugesetzt, daß eine ca. 10 bis 35 Gew.-%ige wäßrige, kolloiddisperse Lösung resultiert. Die Viskosität dieser Dispersionen, gemessen in einem Rotationsviskosimeter bei 20°C, liegt im allgemeinen unterhalb von 50 mPas. Die mittels Laser-Streulicht-Spektroskopie gemessenen mittleren Teilchendurchmesser liegen je nach Reaktionsbedingungen zwischen 15 und 300 nm, vorzugsweise zwischen 50 und 150 nm.

Die Stabilität der erfindungsgemäßen kolloiddispersen Vinylpolymerisate wird auch durch Pfropfanteile des Polymers auf den eingesetzten polymeren Emulgator in Form des kationischen, hydrophobierten Polyamidamins erhöht. Das Polymerisat aus den Komponenten d) und e) und das kationische hydrophobierte Polyamidamin sind also nach der Polymerisation zu einem großen Teil untrennbare, da chemisch verbundene Teile.

Die erfindungsgemäßen Vinylpolymerisat-Dispersionen sind als Leimungsmittel für Papier und Pappe nach allen bei der Papierherstellung für die Oberflächen-und Masseleimung gebräuchlichen Arbeitsmethoden einsetzbar. Die zur Herstellung der Vinylpolymerisate eingesetzten kationischen, hydrophobierten Polyamidamine können ohne Zusatz von Lösungsmitteln und damit ohne Umweltbelastungen und preiswert hergestellt werden.

Die erfindungsgemäßen Vinylpolymerisat-Dispersionen werden vorzugsweise in Mengen von 0,01 bis 10 Gew.-% des in den Vinylpolymerisat-Dispersionen enthaltenen Feststoffs, bezogen auf das Gewicht des herzustellenden, lufttrockenen Papiers eingesetzt.

Beim Einsatz als Oberflächenleimungsmittel können die erfindungsgemäßen Vinylpolymerisate auch auf in der Masse vorgeleimten Papieren eingesetzt werden. Für diese Vorleimung können neben den erfindungsgemäßen Vinylpolymerisat-Dispersionen selbst natürlich auch handelsübliche, kationische Masseleimungsmittel verwendet werden.

Weiterhin kann es vorteilhaft sein, den erfindungsgemäßen Vinylpolymerisat-Dispersionen für die Papierleimung handelsübliche, kationische Retentionsmittel als Leimungsverstärker zuzusetzen. Diese kationischen Polymeren sind an sich bekannt und leiten sich insbesondere ab von Polyamidaminen (EP 2 474, DE-A- 1 802 435), Diallyldimethylammoniumchloriden (EP 262 945) oder modifizierten Polyacrylamiden (US 3 323 979). Im allgemeinen werden 0,02 bis 1 Gew.-%, bevorzugt 0,1 bis 0,5 Gew.-% eines Retentionsmittels zugesetzt.

### Herstellungsbeispiele

### 1. Vorstufen

### Beispiel 1.1 Polyamidamin P 1

2 178 g Bis(3-aminopropyl)methylamin und 2 103 g Adipinsäure werden bei 150°C unter Überleiten von Stickstoff zusammen vorgelegt und langsam unter Abdestillieren des Reaktionswassers auf 190°C erwärmt. Nach 8 Stunden wurde abgekühlt. Der erhaltene spröde, bräunliche Feststoff zeigte einen Restgehalt an primären Aminogruppen von 0,26% (Bestimmung nach "van Slyke" bei Raumtemperatur).

### Beispiel 1.2 Polyamidamin P 2

1 450 g Bis(3-aminopropyl)methylamin und 1 314 g Adipinsäure wurden wie für Polyamidamin P 1 beschrieben bei Temperaturen zwischen 150 und 210°C 10 Stunden lang am Wasserabscheider kondensiert. Der Restgehalt an primärem Amin im erhaltenen Produkt betrug 0,36 %.

### Beispiel 1.3 Hydroxycarbonsäure-Polykondensat H 1

2 019 g 12-Hydroxystearinsäure, 224 g Stearinsäure, 108 g Palmitinsäure, 8 g Myristinsäure und 3 g p-Toluolsulfonsäure wurden in 1 l m-Xylol vorgelegt und am Wasserabscheider so lange gekocht, bis das erhaltene klare, bräunliche Öl eine Rest-Säurezahl von 57,8 aufwies.

### Beispiel 1.4 Hydroxycarbonsäure-Polykondensat H 2

4 382 g 12-Hydroxystearinsäure, 35 g Stearinsäure und 5,9 g p-Toluolsulfonsäure wurden in 2 l m-Xylol vorgelegt und am Wasserabscheider so lange gekocht, bis das erhaltene Klare, bräunliche Öl eine Rest-Säurezahl von 23,8 und eine OH-Zahl von 13 aufwies.

### Beispiel 1.5 Hydroxycarbonsäure-Polykondensat H 3

1 873 g 12-Hydroxystearinsäure, 290 g Stearinsäure, 35 g Palmitinsäure, 3 g Myristinsäure und 1,5 g Orthotitansäuretetrabutylester wurden in 550 g Xylol vorgelegt und am Wasserabscheider 24 Stunden erhitzt. Es entstand ein klares, bräunliches Öl mit einer Säurezahl von 43.

### Beispiel 1.6 Acyliertes Hydroxycarbonsäure-Polykondensat AcH2

3 700 g Hydroxycarbonsäure-Polykondensat H 2 wurden mit 161 g Stearinsäure, 77 g Palmitinsäure und 6 g Myristinsäure versetzt und zuerst 6 Stunden auf 140°C und dann 2 Stunden auf 170°C erhitzt. Überschüsse an eingesetzten Carbonsäuren ließen sich nach dem Abkühlen über einen Filter mit 50 µm Porenweite abfiltrieren. Das erhaltene ölige Produkt hatte eine Rest-OH-Zahl von 4,5 und eine Säurezahl von 23,4.

### Beispiel 1.7 Aktiviertes Hydroxycarbonsäure-Polykondensat AkH1

Zu 1 000 g Hydroxycarbonsäure-Polykondensat H 1 wurden unter Überleiten von Stickstoff zügig 250 g Thionylchlorid bei Raumtemperatur getropft und anschließend 6 Stunden bei 90°C nachgerührt. Nach dem Abziehen flüchtiger Bestandteile bei 80°C und 0,1 mbar wurde ein dunkelbraunes Öl erhalten, in dem laut quantitativer IR-Analyse alle Säuregruppen zu Säurechlorid-Funktionen umgesetzt waren.
IR (Film): ν = 2 920, 2 850, 1 808, 1 733, 1 465, 1 380, 1 255, 1 180, 1 115, 970, 733 cm⁻¹.

### Beispiel 1.8 Aktiviertes Hydroxycarbonsäure-Polykondensat AkH2

1 000 g acyliertes Hydroxycarbonsäure-Polykondensat AcH2 wurden mit 250 g Thionylchlorid wie für AkH1 beschrieben umgesetzt. Im erhaltenen dunkelbraunen Öl waren laut IR-Analyse alle Säuregruppen zu Säurechlorid-Funktionen umgesetzt.

IR (Film): ν = 2 920, 2 860, 1 810, 1 740, 1 650, 1 550, 1 485, 1 382, 1 260, 1 180, 1 120, 735 cm⁻¹

### 2. Darstellung des polymeren Emulgators

### Beispiel 2.1 Hydrophobiertes Polyamidamin HP 1

Unter Überleiten von Stickstoff und Rühren werden bei 165°C zu 1 356 g Polyamidamin P 1 innerhalb von 0,5 Stunden 185 g aktiviertes Hydroxycarbonsäure-Polykondensat AkH 1 getropft. Es wurde 5 Stunden nachgerührt und ein beiger Feststoff erhalten, der laut IR-Analyse frei von Säurechlorid-Funktionen war.

IR (Film): ν = 3 270, 3 060, 2 940, 2 873, 2 800, 2 320, 1 740, 1 640, 1 550, 1 463, 1 380, 1 250, 1 200, 1 160, 1 060 cm⁻¹

### Beispiel 2.2 Hydrophobiertes Polyamidamin HP 2

1 449 g Polyamidamin P 1 wurden mit 325 g aktiviertem Hydroxycarbonsäure-Polykondensat AkH 2 wie für HP 2 beschrieben umgesetzt. Der erhaltene beige Feststoff war laut IR-Analyse frei von Säurechlorid-Funktionen.

IR (Film): ν = 3 270, 3 050, 2 930, 2 800, 2 320, 1 640, 1 550, 1 460, 1 380, 1 275, 1 150, 1 090, 1 058 cm⁻¹

### Beispiel 2.3 Hydrophobiertes Polyamidamin HP 3

2 178 g Bis(3-aminopropyl)methylamin und 2 103 g Adipinsäure wurden angefangen bei 150°C unter Temperatursteigerung bis auf 200°C am Wasserabscheider 8 Stunden lang erhitzt. Der Gehalt an primärem Amin betrug nach dieser Zeit 0,3% (gemessen nach "van Slyke" bei Raumtemperatur). Dann wurde eine Mischung aus 135 g Stearinsäure, 65 g Palmitinsäure und 5 g Myristinsäure zügig zugegeben und die Kondensation am Wasserabscheider bei 200°C 2,5 Stunden lang fortgesetzt. Nach dem Abkühlen wurde ein dunkelbrauner Feststoff erhalten.

IR (Film): ν = 3 250, 2 920, 1 650, 1 552, 1 450, 1 380, 1 260, 1 155, 1 040 cm⁻¹

### Beispiel 2.4 Hydrophobiertes Polyamidamin HP 4

1 938 g N-2-Aminoethylpiperazin und 2 103 g Adipinsäure wurden über 8 Stunden am Wasserabscheider zuerst bei 180°C und mit fortschreitender Reaktion bei 200°C erhitzt. Dann wurde eine Mischung aus 258 g Docosensäure, 14 g Eicosensäure und 5 g Octadecensäure zugegeben und weitere 8 Stunden am Wasserabscheider erhitzt. Nach dem Abkühlen wurde ein gelblicher Feststoff erhalten.

IR (Film): ν = 3 300, 2 920, 1 620, 1 550, 1 440, 1 240, 1 155, 1 030, 1 008 cm⁻¹

### Beispiel 2.5 Kationisches, hydrophobiertes Polyamidamin KHP 1

200 g Produkt HP 1 wurden in eine Mischung aus 1 760 g Wasser und 40 g Eisessig eingerührt, so daß bei Filtration über ein 50 µm-Filter kein Rückstand verblieb. Die erhaltene Lösung wurde anschließend 5 Minuten bei 9 500 U/min verrührt.

### Beispiel 2.6 Kationisches, hydrophobiertes Polyamidamin KHP 2

Aus 200 g Produkt HP 2, 1 760 g Wasser und 40 g Eisessig wurde, wie für KHP 1 beschrieben, einer Lösung hergestellt.

### Beispiel 2.7 Kationisches, hydrophobiertes Polyamidamin KHP 3

200 g Produkt HP 3 wurden in einer Mischung aus 1 800 g Wasser und 45 g Eisessig bei Raumtemperatur gelöst.

### Beispiel 2.8 Kationisches, hydrophobiertes Polyamidamin KHP 4

444 g Polyamidamin P 2 und 261 g Hydroxycarbonsäure-Polykondensat H 3 wurden zusammen vorgelegt und zuerst 2 Stunden bei 150°C, dann 4 Stunden ansteigend bis 200°C am Wasserabscheider erhitzt. Nach Abkühlen auf 90°C wurde zum erhaltenen Kondensat 1 600 g Wasser und 125 g Eisessig gegeben und über ein 200 µm-Filter filtriert (Feststoffgehalt 28,7%).

### Beispiel 2.9 Kationisches, hydrophobiertes Polyamidamin KHP 5

200 g Produkt HP 4 wurden in einer Mischung aus 2 300 g Wasser und 488 g Eisessig bei Raumtemperatur gelöst.

### 3. Herstellung der Emulsionspolymerisate

### Beispiel 3.1 Emulsionspolymerisat E 1

- Lösung 1:: 1 030 g kationisches, hydrophobiertes Polyamidamin KHP 1
1 030 g Wasser
- Lösung 2:: 291,5 g Acrylnitril
291,5 g n-Butylacrylat
- Lösung 3:: 1,6 g 30 Gew.-%iges, wäßriges Wasserstoffperoxid
- Lösung 4:: 16,3 g 30 Gew.-%iges, wäßriges Wasserstoffperoxid
686 g Wasser
- Lösung 5:: 3,9 g 30 Gew.-%iges, wäßriges Wasserstoffperoxid
39 g Wasser

In einer gut mit Stickstoff gespülten Apparatur wurden bei 70°C unter Rühren zur Lösung 1 zügig Lösung 3 und 100 ml der Lösung 2 gegeben. Nach 0,5 Stunden wurde Lösung 4 und die restliche Lösung 2 über 2 Stunden synchron zudosiert und 3 Stunden nachrühren gelassen. Nach zügiger Zugabe der Lösung 5 wurden nochmals 3 Stunden nachgerührt. Anschließend wurden durch Abdestillieren von 400 ml Flüssigkeit bei 150 mbar der Ansatz entgast, abgekühlt und über einen 100 µm-Filter filtriert. Dem Filtrat wurden 400 ml Wasser zugesetzt.

Die erhaltene kolloiddisperse Lösung hatte einen Feststoffgehalt von 15,4 Gew.-% und einen mittleren Teilchendurchmesser von 165 nm.

### Beispiel 3.2 Emulsionspolymerisat E 2

- Lösung 1:: 950 g kationisches, hydrophobiertes Polyamidamin KHP 2
950 g Wasser
- Lösung 2:: 269,0 g Acrylnitril
269,0 g n-Butylacrylat
- Lösung 3:: 1,5 g 30 Gew.-%iges, wäßriges Wasserstoffperoxid
- Lösung 4:: 15,0 g 30 Gew.-%iges, wäßriges Wasserstoffperoxid
63,3 g Wasser
- Lösung 5:: 3,6 g 30 Gew.-%iges, wäßriges Wasserstoffperoxid
36 g Wasser

Die Emulsionspolymerisation wurde wie für das Polymerisat E 1 beschrieben durchgeführt.

Die erhaltene kolloiddisperse Lösung hatte einen Feststoffgehalt von 14,9 Gew.-% und einen mittleren Teilchendurchmesser von 171 nm.

### Beispiel 3.3 Emulsionspolymerisat E 3

- Lösung 1:: 745 g kationisches, hydrophobiertes Polyamidamin KHP 3
1 195 g Wasser
- Lösung 2:: 274,0 g Acrylnitril
274,0 g n-Butylacrylat
- Lösung 3:: 1,5 g 30 Gew.-%iges, wäßriges Wasserstoffperoxid
- Lösung 4:: 15,2 g 30 Gew.-%iges, wäßriges Wasserstoffperoxid
63,5 g Wasser
- Lösung 5:: 3,7 g 30 Gew.-%iges, wäßriges Wasserstoffperoxid
36,7 g Wasser

Die Emulsionspolymerisation wurde wie für das Polymerisat E 1 beschrieben durchgeführt.

Die erhaltene kolloiddisperse Lösung hatte einen Feststoffgehalt von 18,1 Gew.-% und einen mittleren Teilchendurchmesser von 107 nm.

### Beispiel 3.4 Emulsionspolymerisat E 4

- Lösung 1:: 523 g kationisches, hydrophobiertes Polyamidamin KHP 4
2 450 g Wasser
- Lösung 2:: 425,0 g Acrylnitril
425,0 g n-Butylacrylat
- Lösung 3:: 2,0 g 35 Gew.-%iges, wäßriges Wasserstoffperoxid
- Lösung 4:: 20,0 g 35 Gew.-%iges, wäßriges Wasserstoffperoxid
1 000 g Wasser
- Lösung 5:: 5,0 g 30 Gew.-%iges, wäßriges Wasserstoffperoxid
50,0 g Wasser

Die Emulsionspolymerisation wurde im wesentlichen wie für das Polymerisat E 1 beschrieben durchgeführt. Abschließend wurden zur Entgasung flüchtiger Bestandteile 500 ml Flüssigkeit abdestilliert, die nicht durch Wasser ersetzt wurden.

Die erhaltene kolloiddisperse Lösung hatte einen Feststoffgehalt von 20,5 Gew.-% und einen mittleren Teilchendurchmesser von 160 nm.

### Beispiel 3.5 Emulsionspolymerisat E 5

- Lösung 1:: 960 g kationisches, hydrophobiertes Polyamidamin KHP 5
1 040g Wasser
- Lösung 2:: 288,0 g Acrylnitril
288,0 g n-Butylacrylat
- Lösung 3:: 1,7 g 30 Gew.-%iges, wäßriges Wasserstoffperoxid
- Lösung 4:: 16,0 g 30 Gew.-%iges, wäßriges Wasserstoffperoxid
65,0 g Wasser
- Lösung 5:: 3,9 g 30 Gew.-%iges, wäßriges Wasserstoffperoxid
36,4 g Wasser

Die Emulsionspolymerisation wurde wie für das Polymerisat E 1 beschrieben durchgeführt.

Die erhaltene kolloiddisperse Lösung hatte einen Feststoffgehalt von 20,2 Gew.-% und einen mittleren Teilchendurchmesser von 120 nm.

### 4. Vergleichsbeispiel

Als Vergleich in den Anwendungsbeispielen wird ein Leimungsmittel gemäß Beispiel 12 der DE-A-3 537 824 eingesetzt, dessen zugrundeliegender kationischer Emulgator in Isopropanol hergestellt wurde, welches nach erfolgter Emulsionspolymerisation abdestilliert wurde.

### 5. Anwendungsbeispiele

Die folgenden Anwendungsbeispiele zeigen die gute Verwendbarkeit der neuartigen Vinylpolymerisat-Dispersionen als Leimungsmittel bei der Papierherstellung.

Die gute Verwendbarkeit als Leimungsmittel wird für Papiere verschiedener Zusammensetzung, unter verschiedenen Leimungsbedingungen und nach verschiedenen Auswertmethoden beschrieben:

### Papiersorten

- Alaunfreies Papier:: 50 Gew.-% gebleichter Nadelholzzellstoff,
50 Gew.-% gebleichter Laubholzzellstoff,
9,5% Clay-Asche,
Mahlgrad 35°C SR,
pH-Wert: 7,0 bis 7,5,
Flächengewicht: ca. 80 g/m²
- Kreidehaltiges Papier:: 50 Gew.-% gebleichter Nadelholzzellstoff,
40 Gew.-% gebleichter Laubholzzellstoff,
7,9% Kreide-Asche,
Mahlgrad 35°C SR,
pH-Wert: 7,2 bis 7,5,
Flächengewicht: ca. 80 g/m²

### Leimungsbedingungen

- Masseleimung:: Einem 0,5 Gew.-%igen wäßrigen Stoffgemisch aus 50 Teilen gebleichtem Nadelholzzellstoff, 50 Teilen gebleichtem Laubholzzellstoff, 20 Teilen Kreide und 0,2 Teilen Retentionsmittel Retaminol® H wird unter Rühren die vorgegebene Menge an Vinylpolymerisat-Dispersion zugegeben. Nach einer kurzen Einwirkzeit (10 bis 20 s) wird auf einem Laborblattbildner ein Papierblatt gebildet. Dieses wird zwischen Filzen abgepreßt und danach bei 100°C im Trockenzylinder getrocknet.
- Oberflächenleimung:: Die Leimung obiger Papiere erfolgte auf einer Laborleimpresse der Firma Mathis, Zürich/Schweiz-Type HF. Als Leimungsflotte wurde eine Lösung von 5 Gew.-% handelsüblicher Kartoffelstärke (Perfectamyl® A 4692) und eine vorgegebene Menge (siehe Tabelle) der zu prüfenden Vinylpolymerisat-Dispersion in Wasser verwendet. Die Trocknung dieser Papiere erfolgt im Trockenzylinder bei 100°C.

### Auswertemethoden

- Cobb-Test:: Nach DIN 53132 wird die einseitige Wasseraufnahme eines Papiers bei 60 s Prüfzeit zur Beurteilung der Leimungswirkung herangezogen.
- Tintenschwimmprobe (TSP):: Prüfpapiere der Abmessung 7 x 3 cm werden bei 22°C auf blaue Prüftinte (DIN 53126) aufgelegt Nach für die einzelnen Papiersorten unterschiedlichen Prüfzeiten wurden die Probenpapiere von der Tinte genommen, rückseitig auf Löschpapier abgedrückt und nach dem Trocknen das Durchschlagen der Tinte auf die Oberseite als Maß der Leimungswirkung visuell beurteilt. Kein Durchdringen wird mit 1 benotet, vollständiges Durchdringen mit 5. Die Übergangswerte liegen proportional dazwischen.

Darüber hinaus wurde die für viele Leimungsmittel in der Anwendung kritische Schaumneigung wie folgt beurteilt.

0,4 Gew.-% Wirksubstanz der Vinylpolymerisat-Dispersion werden in eine Leimungsflotte aus 5 Gew.-% handelsüblicher Kartoffelstärke (Perfectamyl® A 4692) eingebracht und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm im freien Fall in ein graduiertes Becherglas gegossen. Das Volumen (in ml) des sich über der Flüssigkeitsoberfläche bildenden Schaums wird einmal sofort sowie nach einminütigem Stehen an der Luft bestimmt. Der erste Wert gibt dabei Aufschluß über die Schaumbildungstendenz des Leimungsmittels und der zweite Wert über die Schnelligkeit des Schaumabbaus bzw. dessen Stabilität.

**Tabelle 1**

| Schaumneigung von Leimungsmitteln | | |
|---|---|---|
| Leimungsmittel | Schaumvolumen in ml | |
| | sofort | nach einer Zeit t |
| E 1 | 60 | 0 (t = 30 s) |
| E 2 | 40 | 0 (t = 23 s) |
| E 3 | 80 | 0 (t = 45 s) |
| E 4 | 0 | 0 |
| E 5 | 40 | 0 (t = 25 s) |
| Vergleich | 90 | 50 (t = 60 s) |

**Tabelle 2**

| Oberflächenleimung auf alaunfreiem Papier | | | |
|---|---|---|---|
| Leimungsmittel | Cobb-Werte in g/ml bei Zusatz von | | |
| | 0,8 Gew.-% | 1,0 Gew.-% | 2,0 Gew.-% |
| | Leimungsmittel (bezogen auf reine Wirksubstanz) | | |
| E 1 | 50 | 33 | |
| E 2 | 43 | 32 | |
| E 5 | | | 21,9 |
| Vergleich | 56 | 38 | 22,1 |

**Tabelle 3**

| Oberflächenleimung auf alaunfreiem Papier | |
|---|---|
| Leimungsmittel | 1. Meßdurchgang |
| | TSP-Bewertung nach 5 Min. Prüfzeit und Zusatz von 1 Gew.-% |
| | Leimungsmittel (bezogen auf reine Wirksubstanz) |
| E 1 | 2 |
| E 2 | 2 |
| Vergleich | 2 |

| Leimungsmittel | 2. Meßdurchgang |
|---|---|
| | TSP-Bewertung nach 1 Min. Prüfzeit und Zusatz von 0,2 Gew.-% |
| | Leimungsmittel (bezogen auf reine Wirksubstanz) |
| E 2 | 1,5 |
| E 3 | 1,5 |
| Vergleich | 1,5 |

| Leimungsmittel | 3. Meßdurchgang |
|---|---|
| | TSP-Bewertung nach 5 Min. Prüfzeit und Zusatz von 1 Gew.-% |
| | Leimungsmittel (bezogen auf reine Wirksubstanz) |
| E 4 | 1,5 |
| Vergleich | 1 |

| Leimungsmittel | 4. Meßdurchgang |
|---|---|
| | TSP-Bewertung nach 3 Min. Prüfzeit und Zusatz von 2 Gew.-% |
| | Leimungsmittel (bezogen auf reine Wirksubstanz) |
| E 5 | 1 |
| Vergleich | 1 |

**Tabelle 4**

| Oberflächenleimung auf kreidehaltigem Papier | |
|---|---|
| Leimungsmittel | 1. Meßdurchgang |
| | TSP-Bewertung nach 5 Min. Prüfzeit und Zusatz von 1 Gew.-% |
| | Leimungsmittel (bezogen auf reine Wirksubstanz) |
| E 1 | 1,5 |
| E 2 | 1,5 |
| Vergleich | 1,5 |

| Leimungsmittel | 2. Meßdurchgang |
|---|---|
| | TSP-Bewertung nach 10 Min. Prüfzeit und Zusatz von 1 Gew.-% |
| | Leimungsmittel (bezogen auf reine Wirksubstanz) |
| E 4 | 1,5 |
| Vergleich | 1,5 |

**Tabelle 5**

| Masseleimung von kreidehaltigem Papier | |
|---|---|
| Leimungsmittel | Cobb-Werte in g/ml bei Zusatz von 0,6 Gew.-% |
| | Leimungsmittel (bezogen auf reine Wirksubstanz) |
| E 1 | 27 |
| E 2 | 26 |
| E 3 | 24 |
| E 5 | 22 |
| Vergleich | 21 |

**Tabelle 6**

| Masseleimung von kreidehaltigem Papier | |
|---|---|
| Leimungsmittel | TSP-Bewertung nach 25 Min. Prüfzeit und Zusatz von 0,6 Gew.-% |
| | Leimungsmittel (bezogen auf reine Wirksubstanz) |
| E 1 | 2 |
| E 2 | 1,5 |
| E 3 | 1,5 |
| E 5 | 1,5 |
| Vergleich | 1,5 |

Die obigen anwendungstechnischen Ergebnisse zeigen, daß die erfindungsgemäßen Vinylpolymerisat-Dispersionen im Vergleich zum Leimungsmittel gemäß Beispiel 12 der DE-A-3 537 824 ein deutlich verbessertes Schaumverhalten bei vergleichbar guter Leimungswirkung aufweisen. Weiterhin werden die erfindungsgemäßen Leimungsmittel ohne Verwendung organischer Lösungsmittel in Schmelzen bzw. Wasser dargestellt und zeichnen sich daher durch ökologische Vorteile gegenüber dem Stand der Technik aus.

## Patentansprüche

1. Verfahren zur Herstellung von Vinylpolymerisat-Dispersionen durch radikalisch initiierte Emulsionspolymerisation von olefinisch ungesättigten Monomeren im wäßrigen Medium, dadurch gekennzeichnet, daß als Emulgator ein kationisches hydrophobiertes Polyamidamin mit einem Gehalt an kationischen Gruppen zwischen 0,01 und 0,3 Ladungsäquivalenten pro 100 g dieses Stoffes, einem Gehalt an hydrophoben Gruppen zwischen 0,5 und 50 Gew.-% und einem Gehalt an basischen Stickstoffatomen zwischen 0 und 3 Gew.-%, jeweils bezogen auf kationisches, hydrophobiertes Polyamidamin, eingesetzt wird, das erhältlich ist durch Hydrophobierung eines basischen Polyamidamins (A) mit Monocarbonsäuren (B), die der Formel
R₆-COOH (VII)
worin
R₆ für geradkettiges oder verzweigtes, gesättigtes oder olefinisch ungesättigtes Alkyl mit 7 bis 31 C-Atomen steht,
und/oder der Formel
R₇-COOH (VIII)
worin
R₇ für geradkettiges oder verzweigtes, gesättigtes oder olefinisch ungesättigtes Monohydroxyalkyl mit 7 bis 31 C-Atomen steht,
und/oder der Formel
H-[-O-R₆-CO-]_{f}-OH (IX)
worin
R₆ die oben für Formel (VII) angegebene Bedeutung hat, und
f für eine ganze Zahl von 2 bis 50, vorzugsweise von 3 bis 20 steht,
und/oder der Formel
R₆-CO-[-O-R₆-CO-]_{f}-OH (X),
worin
R₆ und f die oben angegebene Bedeutung haben,
und/oder den Formeln
H-[O-R₆-CO-]_{f}-Cl (XI)
und/oder
R₆-CO-[-O-R₆-CO-]_{f}-Cl (XII),
worin
R₆ und f jeweils die oben angegebene Bedeutung haben,
entsprechen, nachfolgender Protonierung mit Säuren (C) und/oder Quaternierung mit Monoepoxiden (D).

2. Verfahren gemäß Anspruch 1, dadurch gekennzeichnet, daß als basische Polyamidamine (A) Kondensationsprodukte, bestehend aus Struktureinheiten, die sich ableiten von
a1): Polyaminen, die mindestens zwei zur Amidbildung befähigte Aminogruppen und mindestens eine weitere sekundäre oder tertiäre Aminogruppe enthalten,
gegebenenfalls
a2): Polyaminen, die zwei zur Amidbildung befähigte Aminogruppen enthalten,
b): gesättigte oder ungesättigte aliphatische und/oder aromatische Dicarbonsäuren und/oder deren funktionellen Derivaten
und gegebenenfalls
c): omega-Aminocarbonsäuren und/oder Lactamen,
eingesetzt werden,
wobei, bezogen auf 1 Mol der Komponente b), 0,8 bis 1,2 Mol der Komponente a1), gegebenenfalls bis zu 0,8 Mol der Komponente a2) und gegebenenfalls bis zu 1,5 Mol der Komponente c) eingesetzt werden, mit der Maßgabe, daß das Molverhältnis a) : b) Werte zwischen 0,8 : 1 und 1,2 : 1 annimmt.

3. Verfahren gemäß wenigstens einem der vorhergehenden Ansprüche, dadurch gekennzeichnet, daß die Monocarbonsäuren B) den Formeln
H-[O-R₆-CO-]_{f}-Cl (XI)
und/oder
R₆-CO-[-O-R₆-CO-]_{f}-Cl (XII),
worin
R₆ und f jeweils die in Anspruch 1 angegebene Bedeutung haben,
entsprechen.

4. Verfahren gemäß wenigstens einem der vorhergehenden Ansprüche, dadurch gekennzeichnet, daß als Säuren (C) anorganische Säuren oder verdünnte oder konzentrierte organischer Carbonsäuren mit kurzer Alkylkette, die 1 bis 4 C-Atome enthält, eingesetzt werden.

5. Verfahren gemäß Wenigstens einem der vorhergehenden Ansprüche, dadurch gekennzeichnet, daß als Monoepoxide (D) Ethylenoxid, 1,2-Butylenoxid, 2,3-Butylenoxid, Isobutylenoxid, 1,2-Epoxidecan, 1,2-Epoxidodecan, Styroloxid, Cyclohexenoxid, Glycidylalkohol, Propylenoxid oder Epichlorhydrin eingesetzt werden.

6. Verfahren gemäß wenigstens einem der vorhergehenden Ansprüche, dadurch gekennzeichnet, daß als Emulgatoren kationische, hydrophobierte Polyamidamine eingesetzt werden, die erhältlich sind durch Kondensation von Polyaminen a1) der Formel 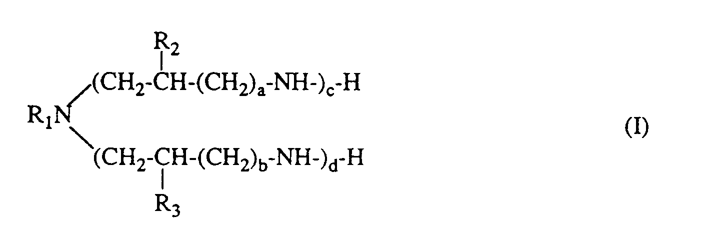 worin
R₁, R₂ und R₃ unabhängig voneinander für H, Methyl, Ethyl oder 2-Hydroxyethyl stehen,
a und b unabhängig voneinander für 0, 1, 2, 3 oder 4 stehen,
c und d unabhängig voneinander für 1, 2, 3, 4, 5 oder 6 stehen
und/oder der Formel 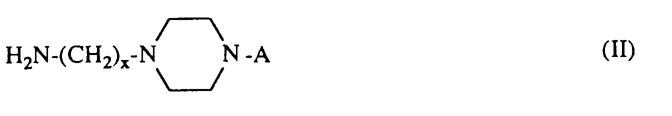 worin
x für 2 oder 3 steht und
A für Wasserstoff, Aminoethyl oder Aminopropyl steht,
und gegebenenfalls Polyaminen a2) der Formel 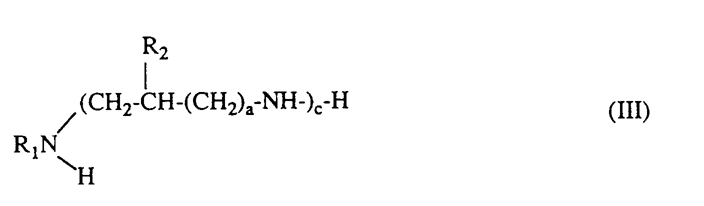 worin
R₁, R₂, a und c die oben angegebene Bedeutung haben,
mit 80 bis 120 Mol-% Dicarbonsäuren bzw. deren Derivaten b) der Formel
R₄-O-CO-(CH₂)ₑ-CO-O-R₅ (VI)
worin
R₄ und R₅ unabhängig voneinander für Wasserstoff, C₁-C₆-Alkyl oder Phenyl stehen und
e für 0 oder eine ganze Zahl von 1 bis 10 steht,
bezogen auf die insgesamt eingesetzte Molmenge an Polyaminen, anschließender Hydrophobierung der so erhaltenen basischen Polyamidamine (A) mit 10 bis 100 Mol-% einer langkettigen Monocarbonsäure (B) der Formel
R₆-COOH (VII)
worin
R₆ für geradkettiges oder verzweigtes, gesättigtes oder olefinisch ungesättigtes Alkyl mit 7 bis 31 C-Atomen steht
und/oder der Formel
R₇-COOH (VIII)
worin
R₇ für geradkettiges oder verzweigtes, gesättigtes oder olefinisch ungesättigtes Monohydroxyalkyl mit 7 bis 31 C-Atomen steht,
und/oder der Formel
H-[-O-R₆-CO-]_{f}-OH (IX)
und/oder der Formel
R₆-CO-[-O-R₆-CO-]_{f}-OH (X)
oder mit 10 bis 100 Mol-% eines Säurechlorids der Formel
H-[-O-R₆-CO-]_{f}-Cl (XI)
und/oder der Formel
R₆-CO-[-O-R₆-CO-]_{f}-Cl (XII)
wobei jeweils
R₆ und f die oben angegebenen Bedeutungen haben,
und die Mol-%-Angaben für die Formeln (VII) bis (XII) sich jeweils auf den Gehalt an primären und sekundären Aminfunktionen im basischen Polyamidamin (A) beziehen,
nachfolgender Protonierung des so erhaltenen hydrophobierten Polyamidamins mit 50 bis 100 Mol-% dissoziierter Protonen einer Säure (C) und/oder Quaternierung mit 1 bis 80 Mol-% eines Monoepoxids (D), jeweils bezogen auf den Gehalt an basischen Aminfunktionen im hydrophobierten Polyamidamin (A).

7. Verfahren gemäß wenigstens einem der vorhergehenden Ansprüche, dadurch gekennzeichnet, daß als olefinisch ungesättigte Monomere
d) 5 bis 95 Gew.-% Acrylnitril, Methacrylnitril oder Styrol oder deren Mischungen
und
e) 5 bis 95 Gew.-% (Meth)acrylsäureester mit 1 bis 12 C-Atomen im Alkoholrest,
- wobei die Summe der Komponenten d) und e) stets 100 Gew.-% beträgt -
verwendet werden.

8. Verfahren gemäß wenigstens einem der vorhergehenden Ansprüche, dadurch gekennzeichnet, daß ein Monomerengemisch aus d) und e) in Gegenwart von 2 bis 70 Gew.-% eines kationischen, hydrophobierten Polyamidamins in Wasser emulgiert, wobei die angegebenen Gewichtsprozente sich auf das eingesetzte Monomerengemisch beziehen, und die so erhaltene Emulsion einer radikalisch initiierten Emulsionspolymerisation bei Temperaturen von 20 bis 150°C unterworfen wird.

9. Verfahren zum Leimen von Papier, dadurch gekennzeichnet, daß Vinylpolymerisat-Dispersionen, erhälteich nach einem Verfahren gemäß einem der vorhergehenden Ansprüche, eingesetzt werden.

## Claims

1. Process for the preparation of vinyl polymer dispersions by emulsion polymerisation, initiated by free radicals, of olefinically unsaturated monomers in an aqueous medium, characterised in that the emulsifier employed is a cationic polyamidoamine which has been rendered hydrophobic, has a content of cationic groups of between 0.01 and 0.3 charge equivalent per 100 g of this substance, a content of hydrophobic groups of between 0.5 and 50% by weight and a content of basic nitrogen atoms of between 0 and 3% by weight, in each case based on the cationic polyamidoamine which has been rendered hydrophobic, and is obtainable by rendering a basic polyamidoamine (A) hydrophobic with monocarboxylic acids (B) which correspond to the formula
R₆-COOH (VII)
wherein
R₆ represents straight-chain or branched, saturated or olefinically unsaturated alkyl having 7 to 31 C atoms,
and/or of the formula
R₇-COOH (VIII)
wherein
R₇ represents straight-chain or branched, saturated or olefinically unsaturated monohydroxyalkyl having 7 to 31 C atoms
and/or of the formula
H-[-O-R₆-CO-]_{f}-OH (IX)
wherein
R₆ has the meaning given above under formula (VII) and
f represents an integer from 2 to 50, preferably from 3 to 20,
and/or of the formula
R₆-CO-[-O-R₆-CO-]_{f}-OH (X)
wherein
R₆ and f have the abovementioned meaning,
and/or to the formulae
H-[O-R₆-CO-]_{f}-Cl (XI)
and/or
R₆-CO-[-O-R₆-CO-]_{f}-Cl (XII)
wherein
R₆ and f in each case have the abovementioned meaning, subsequent protonation with acids (C) and/or quaternisation with monoepoxides (D).

2. Process according to Claim 1, characterised in that the basic polyamidoamines (A) employed are condensation products comprising structural units which are derived from
a1): polyamines which contain at least two amino groups which are capable of amide formation and at least one other secondary or tertiary amino group
if appropriate
a2): polyamines which contain two amino groups which are capable of amide formation,
b): saturated or unsaturated aliphatic and/or aromatic dicarboxylic acids and/or functional derivatives thereof
and if appropriate
c): omega-aminocarboxylic acids and/or lactams,
preferably 0.8 to 1.2 mol of component a1), if appropriate up to 0.8 mol of component a2), and if appropriate up to 1.5 mol of component c) being employed per mole of component b), with the proviso that the molar ratio of a):b) assumes values of between 0.8:1 and 1.2:1.

3. Process according to at least one of the preceding claims, characterised in that the monocarboxylic acids B) correspond to the formulae
H-[O-R₆-CO-]_{f}-Cl (XI)
and/or
R₆-CO-[-O-R₆-CO-]_{f}-Cl (XII)
wherein
R₆ and f in each case have the meaning given in Claim 1.

4. Process according to at least one of the preceding claims, characterised in that the acids (C) employed are inorganic acids or dilute or concentrated organic carboxylic acids having a short alkyl chain which contains 1 to 4 C atoms.

5. Process according to at least one of the preceding claims, characterised in that the monoepoxides (D) employed are ethylene oxide, 1,2-butylene oxide, 2,3-butylene oxide, isobutylene oxide, 1,2-epoxydecane, 1,2-epoxydodecane, styrene oxide, cyclohexene oxide, glycidyl alcohol, propylene oxide or epichlorohydrin.

6. Process according to at least one of the preceding claims, characterised in that the emulsifiers employed are cationic polyamidoamines which have been rendered hydrophobic and are obtainable by condensation of polyamines a1) of the formula 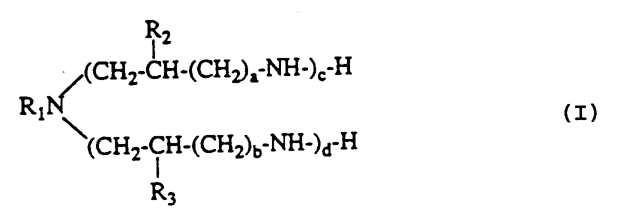 wherein
R₁, R₂ and R₃ independently of one another are H, methyl, ethyl or 2-hydroxyethyl,
a and b independently of one another represent 0, 1, 2, 3 or 4 and
c and d independently of one another represent 1, 2, 3, 4, 5 or 6,
and/or the formula 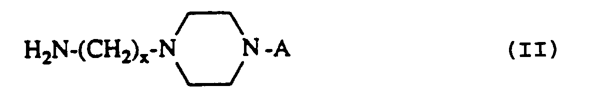 wherein
x represents 2 or 3 and
A represents hydrogen, aminoethyl or aminopropyl,
and if appropriate polyamines a2) of the formula 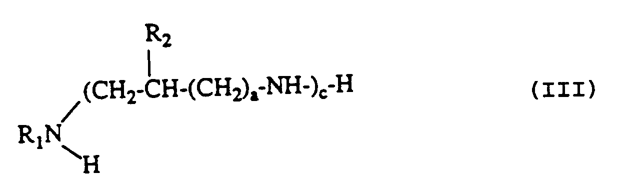 wherein
R₁, R₂, a and c have the abovementioned meaning,
with 80 to 120 mol% of dicarboxylic acids or derivatives b) thereof of the formula
R₄-O-CO-(CH₂)ₑ-CO-O-R₅ (VI)
wherein
R₄ and R₅ independently of one another represent hydrogen, C₁-C₆-alkyl or phenyl and
e represents 0 or an integer from 1 to 10,
based on the total molar amount of polyamines employed, subsequent rendering of the resulting basic polyamidoamines (A) hydrophobic with 10 to 100 mol% of a long-chain monocarboxylic acid (B) of the formula
R₆-COOH (VII)
wherein
R₆ represents straight-chain or branched, saturated or olefinically unsaturated alkyl having 7 to 31 C atoms,
and/or the formula
R₇-COOH (VIII)
wherein
R₇ represents straight-chain or branched, saturated or olefinically unsaturated monohydroxyalkyl having 7 to 31 C atoms,
and/or the formula
H-[-O-R₆-CO-]_{f}-OH (IX)
and/or the formula
R₆-CO-[-O-R₆-CO-]_{f}-OH (X)
or with 10 to 100 mol% of an acid chloride of the formula
H-[-O-R₆-CO-]_{f}-Cl (XI)
and/or the formula
R₆-CO-[-O-R₆-CO-]_{f}-Cl (XII)
wherein, in each case,
R₆ and f have the abovementioned meanings,
and the mol% data for the formulae (VII) to (XII) in each case relate to the content of primary and secondary amine functions in the basic polyamidoamine (A),
subsequent protonation of the resulting polyamidoamine, which has been rendered hydrophobic, with 50 to 100 mol% of dissociated protons of an acid (C), and/or quaternisation with 1 to 80 mol% of a monoepoxide (D), in each case based on the content of basic amine functions in the polyamidoamine (A) which has been rendered hydrophobic.

7. Process according to at least one of the preceding claims, characterised in that the olefinically unsaturated monomers used are
d) 5 to 95% by weight of acrylonitrile, methacrylonitrile or styrene, or mixtures thereof,
and
e) 5 to 95% by weight of (meth)acrylic acid ester having 1 to 12 C atoms in the alcohol radical,
- the sum of components d) and e) always being 100% by weight.

8. Process according to at least one of the preceding claims, characterised in that a monomer mixture of d) and e) is emulsified in water in the presence of 2 to 70% by weight of a cationic polyamidoamine which has been rendered hydrophobic, the percentages by weight stated being based on the monomer mixture employed, and the resulting emulsion is subjected, at temperatures of 20 to 150°C, to an emulsion polymerisation initiated by free radicals.

9. Process for sizing paper, characterised in that vinyl polymer dispersions, obtainable by a process according to one of the preceding claims, are employed.

## Revendications

1. Procédé de préparation de dispersions de polymères vinyliques par polymérisation radicalaire en émulsion de monomères à insaturation oléfinique en milieu aqueux, caractérisé en ce que l'on utilise en tant qu'agent émulsionnant une polyamidamine cationique rendue hydrophobe, contenant des groupes cationiques en quantité de 0,01 à 0,3 équivalent de charge pour 100 g de la substance, une teneur en groupes hydrophobes de 0,5 à 50 % en poids et une teneur en atomes d'azote basiques de 0 à 3 % en poids, dans les deux cas par rapport à la polyamidamine cationique rendue hydrophobe, cet agent émulsionnant étant obtenu en rendant hydrophobe une polyamidamine basique (A) à l'aide d'acides monocarboxyliques (B) répondant à la formule
R₆-COOH (VII)
dans laquelle
R₆ représente un groupe alkyle à chaîne droite ou ramifiée, saturé ou à insaturation oléfinique, en C₇-C₃₁,
et/ou de formule
R₇-COOH (VIII)
dans laquelle
R₇ représente un groupe monohydroxyalkyle à chaîne droite ou ramifiée, saturé ou à insaturation oléfinique, en C₇-C₃₁,
et/ou de formule
H-[-O-R₆-CO-]_{f}-OH (IX)
dans laquelle
R₆ a les significations indiquées en référence à la formule VII et f est un nombre entier allant de 2 à 50, de préférence de 3 à 20,
et/ou de formule
R₆-CO-[-O-R₆-CO-]_{f}-OH (X)
dans laquelle
R₆ et f on les significations indiquées ci-dessus,
et/ou de formule
H-[-O-R₆-CO-]_{f}-Cl (XI)
et/ou de formule
R₆-CO-[-O-R₆-CO-]_{f}-Cl (XII)
dans lesquelles
R₆ et f ont les significations indiquées ci-dessus,
en faisant suivre d'une protonisation par des acides (C) et/ou d'une quaternisation par des monoépoxydes (D).

2. Procédé selon la revendication 1, caractérisé en ce que l'on utilise en tant que polyamidamines basiques (A) des produits de condensation consistant en motifs de structure dérivant de
a1) des polyamines contenant au moins deux groupes amino aptes à une formation d'amides et au moins un autre groupe amino secondaire ou tertiaire,
le cas échéant
a2) des polyamines contenant deux groupes amino aptes à une formation d'amides,
b) des acides dicarboxyliques aliphatiques saturés ou insaturés et/ou aromatiques et/ou leurs dérivés fonctionnels,
et le cas échéant
c) des acides oméga-aminocarboxyliques et/ou des lactames,
avec mise en oeuvre de 0,8 à 1,2 mol du composant a1), le cas échéant jusqu'à 0,8 moi du composant a2) et le cas échéant jusqu'à 1,5 moi du composant c) pour une mole du composant b), sous réserve que le rapport molaire a/b doit être compris entre 0,8 : 1 et 1,2 : 1.

3. Procédé selon au moins l'une des revendications qui précédent, caractérisé en ce que les acides monocarboxyliques (B) répondent aux formules
H-[-O-R₆-CO-]_{f}-Cl (XI)
et/ou
R₆-CO-[-O-R₆-CO-]_{f}-Cl (XII)
dans lesquelles
R₆ et f ont les significations indiquées dans la revendication 1.

4. Procédé selon au moins l'une des revendications qui précèdent, caractérisé en ce que l'on utilise en tant qu'acides (C) des acides minéraux ou des acides organiques carboxyliques dilués ou concentrés à chaîne alkyle courte, en C₁-C₄.

5. Procédé selon au moins l'une des revendications qui précèdent, caractérisé en ce que l'on utilise en tant que monoépoxydes (D) l'oxyde d'éthylène, l'oxyde de 1,2-butylène, l'oxyde de 2,3-butylène, l'oxyde d'isobutylène, le 1,2-époxydécane, le 1,2-époxydodécane, l'oxyde de styrène, l'oxyde de cyclohexène, l'alcool glycidylique, l'oxyde de propylène ou l'épichlorhydrine.

6. Procédé selon au moins l'une des revendications qui précèdent, caractérisé en ce que l'on utilise en tant qu'agents émulsionnants des polyamidamines cationiques rendues hydrophobes qu'on obtient en condensant des polyamines a1) de formule 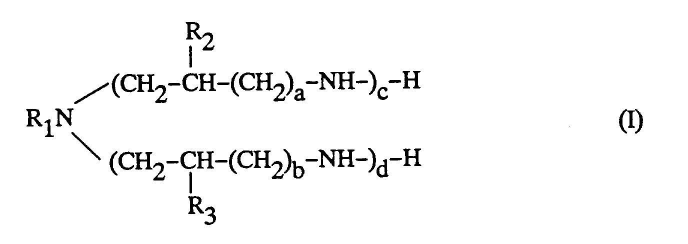 dans laquelle
R₁, R₂ et R₃ représentent chacun indépendamment les uns des autres, H, un groupe méthyle, éthyle ou 2-hydroxyéthyle,
a et b sont égaux chacun, indépendamment l'un de l'autre, à 0, 1, 2, 3 ou 4,
c et d sont égaux chacun, indépendamment l'un de l'autre, à 1, 2, 3 4, 5 ou 6, et/ou de formule 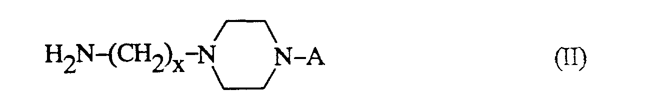 dans laquelle
x est égal à 2 ou 3 et
A représente l'hydrogène, un groupe aminoéthyle ou aminopropyle, et le cas échéant des polyamides a2) de formule 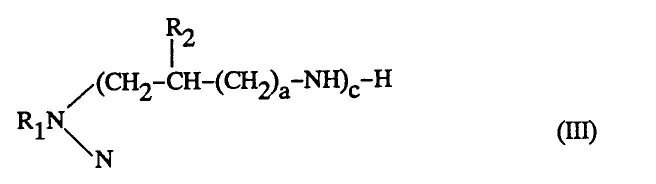 dans laquelle
R₁, R₂, a et c ont les significations indiquées ci-dessus,
avec 80 à 120 mol % d'acides dicarboxyliques ou dérivés b) de formule
R₄-O-CO-(CH₂)ₑ-CO-O-R₅ (VI)
dans laquelle
R₄ et R₅ représentent chacun, indépendamment l'un de l'autre, l'hydrogène, un groupe alkyle en C₁-C₆ ou phényle et
e est égal à 0 ou à un nombre entier allant de 1 à 10,
par rapport à la quantité molaire totale des polyamines,
en faisant suivre d'une réaction, rendant hydrophobes les polyamidamines A) basiques ainsi obtenues, avec 10 à 100 mol % d'un acide monocarboxylique à longue chaîne B) de formule
R₆-COOH (VII)
dans laquelle
R₆ représente un groupe alkyle à chaîne droite ou ramifiée, saturé ou à insaturation oléfinique, en C₇-C₃₁,
et/ou de formule
R₇-COOH (VIII)
dans laquelle
R₇ représente un groupe monohydroxyalkyle à chaîne droite ou ramifiée, saturé ou à insaturation oléfinique, en C₇-C₃₁,
et/ou de formule
H-[-O-R₆-CO-]_{f}-OH (IX)
et/ou de formule
R₆-CO-[-O-R₆-CO-]_{f}-OH (X)
ou avec 10 à 100 mol % d'un chlorure d'acide de formule
H-[-O-R₆-CO-]_{f}-Cl (XI)
et/ou de formule
R₆-CO-[-O-R₆-CO-]_{f}-Cl (XII)
dans lesquelles
R₆ et f ont les significations indiquées ci-dessus,
et les indications de moles % données pour les composés VII à XII se rapportant dans chaque cas à la teneur en fonctions amines primaires et secondaires de la polyamidamine basique A),
en faisant suivre de la protonisation de la polyamidamine ainsi rendue hydrophobe par 50 à 100 mol % de protons dissociés d'un acide C) et/ou de la quaternisation à l'aide de 1 à 80 mol % d'un monoépoxyde D), dans les deux cas par rapport à la teneur en fonctions amines basiques de la polyamidamine rendue hydrophobe A).

7. Procédé selon au moins l'une des revendications qui précèdent, caractérisé en ce que l'on utilise en tant que monomères à insaturation oléfinique
d) 5 à 95 % en poids d'acrylonitrile, de méthacrylonitrile, de styrène ou leurs mélanges et
e) 5 à 95 % en poids d'esters (méth)acryliques contenant 1 à 12 atomes de carbone dans le radical alcoolique,
la somme des composants d) et e) représentant toujours 100 % en poids.

8. Procédé selon au moins l'une des revendications qui précèdent, caractérisé en ce que l'on émulsionne dans l'eau un mélange de monomères consistant en d) et e) en présence de 2 à 70 % en poids d'une polyamidamine cationique rendue hydrophobe, ces indications de % se rapportant aux mélanges des monomères mis en oeuvre, et on soumet l'émulsion obtenue à une polymérisation radicalaire en émulsion à des températures de 20 à 150°C.

9. Procédé pour coller le papier, caractérisé en ce que l'on utilise des dispersions de polymères vinyliques obtenues par un procédé selon l'une des revendications qui précèdent.
